# FASCICULE DE BREVET EUROPEEN

(11) **EP 1 024 898 B1**
(45) Date de publication et mention de la délivrance du brevet: **05.06.2002**
(21) Numéro de dépôt: 98949040.4
(22) Date de dépôt: 12.10.1998
(51) Int. Cl.: B01J 31/12

(54) **PROCEDE DE POLYMERISATION PAR OUVERTURE DE CYCLES OXYGENES utilisant une composition catalytique à base d'un oxyde métallique greffé**
POLYMERISIERUNGSVERFAHREN DURCH ÖFFNUNG VON SAUERSTOFFHALTIGEn RINGEN mit Hilfe eines gepropftem Metalloxides
POLYMERISATION METHOD BY OPENING OXYGENATED CYCLES using a catalytic composition based on a grafted metal oxide

(30) Priorité: 14.10.1997 FR 9712827
(43) Date de publication de la demande: 09.08.2000
(73) Titulaire: RHODIA CHIMIE, 92408 Courbevoie Cédex (FR)
(72) Inventeur: DELAITE, Christelle, F-69005 Lyon (FR); HAMAIDE, Thierry, F-38200 Vienne (FR); SPITZ, Roger, F-69006 Lyon (FR); TORTOSA, Karine, F-69100 Villeurbanne (FR)
(74) Mandataire: Dubruc, Philippe
(86) Numéro de dépôt international: FR9802181
(87) Numéro de publication internationale: WO9919064

(56) Documents cités:
- EP-A- 0 230 983
- EP-A- 0 776 699
- WO-A-95/29755

## Description

La présente invention concerne un procédé de polymérisation par ouverture de cycles oxygénés.

La polymérisation par ouverture de cycles oxygénés, par exemple les lactones ou les lactides, est bien connue. On utilise des alcoolates de métaux comme amorceurs de la réaction. Ces amorceurs sont mis en oeuvre en milieu homogène et ils se sont révélés efficaces. Ils présentent toutefois des inconvénients. Tout d'abord, leur solubilité est faible. En outre, lors de leur utilisation, il se produit des agrégations des molécules d'alcoolates ce qui entraîne l'existence de plusieurs familles de centres actifs ce qui a pour conséquence une distribution plus large des masses moléculaires du polymère obtenu. Enfin, il est parfois difficile de séparer l'amorceur du polymère formé, ce qui nuit à la pureté de ce dernier.

Il serait donc souhaitable de pouvoir disposer d'un catalyseur hétérogène.

Le document WO 95/29755 décrit un catalyseur hétérogène dans lequel du niobium est fixé sur un support. Toutefois, ce catalyseur est utilisé dans une réaction de conversion d'une oléfine en une autre oléfine.

L'objet de l'invention est de fournir un catalyseur utilisable pour la polymérisation par ouverture de cycles oxygénés.

Dans ce but, la composition de l'invention comprend un support choisi dans le groupe des oxydes métalliques susceptibles de présenter des fonctions hydroxyles, sur lequel est greffé un groupement de formule (1) - M(OR)ₙ dans laquelle M est un élément choisi parmi le scandium, le zirconium, l'hafnium, le niobium, le tantale, les terres rares et les actinides, R est un groupement organique et n est un nombre entier supérieur ou égal à 1.

L'invention concerne aussi un procédé de préparation de cette composition qui est caractérisé en ce qu'on forme une suspension du support précité puis on met en contact et on fait réagir cette suspension avec un composé de formule (2) M(OR)ₙ₊₁ dans laquelle M, R et n sont définis comme précédemment.

L'invention concerne enfin un procédé de polymérisation par ouverture de cycles oxygénés qui est caractérisé en ce qu'on utilise, à titre de catalyseur, une composition telle que définie précédemment, en présence d'un composé protique.

D'autres caractéristiques, détails et avantages de l'invention apparaîtront encore plus complètement à la lecture de la description qui va suivre, ainsi que des divers exemples concrets mais non limitatifs destinés à l'illustrer.

La composition de l'invention comprend un support qui est choisi dans le groupe des oxydes métalliques susceptibles de présenter des fonctions hydroxyles (fonctions ― OH). Comme oxydes de ce type, on peut citer la silice SiO₂, l'alumine Al₂O₃, l'oxyde de zirconium ZrO₂, l'oxyde de cérium CeO₂, l'oxyde de titane TiO₂ et l'oxyde de thorium. On peut aussi mentionner les supports à base d'associations ou de mélanges de ces oxydes. On peut indiquer plus particulièrement les mélanges CeO₂/ZrO₂ les proportions respectives des deux oxydes pouvant varier dans de larges limites. On peut aussi mentionner les associations silice /alumine ou les zéolithes.

Le support de la composition de l'invention comporte, greffé à sa surface, un groupement de formule (1) ― M(OR)ₙ. Par greffé, on entend le fait que le groupement est chimiquement lié au support, notamment par une liaison du type covatent. Ce greffage se fait à partir des groupements hydroxyles du support pour donner une liaison A ― O ― M(OR)ₙ, A représentant l'élément métallique du support. Dans le cas de la silice par exemple et à partir des groupements silanols de celle-ci, on aura sur la surface du support des liaisons Si ― O ― M(OR)ₙ.

Dans le groupement de formule (1), M est choisi parmi le scandium, le zirconium, l'hafnium, le niobium, le tantale, les terres rares et les actinides.

Par terre rare on entend les éléments du groupe constitué par l'yttrium et les éléments de la classification périodique de numéro atomique compris inclusivement entre 57 et 71. L'élément M peut être plus particulièrement l'yttrium, le lanthane, le samarium ou le néodyme.

Dans le cas des actinides, M peut être plus particulièrement l'uranium.

R est un groupe organique. Il s'agit généralement d'un groupe ayant de 1 à 100 atomes de carbones, notamment de 1 à 50 atomes de carbone. R peut comporter un ou plusieurs hétéroatomes comme les halogènes, l'azote, l'oxygène, le soufre et le phosphore. R peut être plus particulièrement un groupe alkyl, saturé ou insaturé, linéaire ou ramifié, un groupe aryle, un groupe aralkyle ou un groupe alkaryle. Selon un mode de réalisation particulier, R est un groupe alkyl comprenant de 1 à 18 atomes de carbone comme le groupe propyle.

La valeur de n est au plus égale à v-1, v étant la valence maximale de l'élément M.

De préférence, le support est un support ayant subi un traitement thermique ayant pour but d'éliminer l'eau libre ou adsorbée d'une part et, d'autre part, de réguler la densité ou la teneur en fonctions hydroxyles du support. Cette teneur peut être dosée par voie chimique, par exemple par réaction du triéthylaluminium et mesure du volume d'éthane gazeux dégagé. On cherche ainsi par ce traitement thermique à obtenir une densité des fonctions hydroxyles permettant de fixer le plus possible le métal au support par une seule liaison chimique.

Dans le cas de la silice, on utilise de préférence une silice présentant une surface spécifique BET d'environ 100 à environ 700m²/g, plus particulièrement entre 250 et 350m²/g. Pour l'alumine, cette surface peut être comprise entre 150 et 250m²/g.

On entend par surface spécifique, la surface spécifique BET déterminée par adsorption d'azote conformément à la norme ASTM D 3663-78 établie à partir de la méthode BRUNAUER - EMMETT- TELLER décrite dans le périodique "The Journal of the American Society, 60, 309 (1938)".

Le procédé de préparation de la composition de l'invention va maintenant être décrit.

Ce procédé comprend la formation d'une suspension du support et la réaction de cette suspension avec un composé de formule (2) M(OR)ₙ₊₁. La réaction a lieu entre les groupements hydroxyles du support et ce composé pour donner les liaisons qui ont été décrites plus haut.

De préférence, on forme la suspension et on conduit la réaction en conditions anhydres et dans un solvant du composé de formule (2). Le solvant est généralement un liquide aprotique anhydre, polaire ou non polaire. Il peut être plus particulièrement choisi parmi les produits liquides dans les conditions normales de température et de pression, par exemple l'hexane, le benzène, le toluène, les xylènes, le dichloro-1,2 éthane, l'acétonitrile, le dimethylsulfoxyde, le diméthylformamide et l'hexaméthylphosphorotriamide.

La réaction est faite de préférence avec un excès du composé de formule (2) par rapport au nombre de sites hydroxyles (―OH) présents en surface du support. Cet excès peut être de 1,5 à 2 fois le nombre des sites hydroxyles.

La réaction est faite en chauffant le milieu réactionnel à une température qui n'est pas critique, qui dépend notamment de la nature du solvant et qui peut être comprise par exemple entre 40 et 100°C.

A l'issue de la réaction, le produit obtenu est séparé du milieu réactionnel par tout moyen connu et maintenu sous atmosphère anhydre. Après séparation du milieu réactionnel il peut être lavé avec le solvant précité. Il est enfin séché. Si nécessaire, il peut être conservé dans ce même solvant.

Selon une variante préférée, on fait subir au support un traitement thermique préalable. Comme indiqué plus haut, ce traitement thermique a pour but d'obtenir un support sans eau libre ni adsorbée et à teneur régulée en fonctions hydroxyles. Ce traitement thermique se fait habituellement par chauffage à des températures comprises entre 130°C et 900°C sous vide ou sous gaz inerte. Ces températures dépendent de la nature du support. Elles doivent être suffisamment élevées pour permettre l'élimination de l'eau libre ou adsorbée et la régulation de la teneur en fonctions hydroxyles mais elles ne doivent pas dépasser les température de début de frittage du support concerné. L'analyse par infrarouge, par exemple, du support traité thermiquement permet de vérifier si l'eau a bien été éliminée, après quoi, le dosage des fonctions hydroxyles est effectué de la manière décrite plus haut.

Lors de la réaction entre le composé de formule (2) et les groupements hydroxyles du support, il se forme un composé de formule ROH. Selon une autre variante de l'invention, on élimine ce composé de formule ROH durant la réaction, lors de sa formation.

On notera qu'il est possible de mettre en oeuvre le procédé qui vient d'être étudié non pas à partir d'un support comme décrit précédemment mais à partir d'un support préalablement greffé, c'est à dire un support qui comporte à sa surface des liaisons A ― O ― M(OR)ₙ comme décrites plus haut. Dans ce cas, on forme une suspension du support préalablement greffé et on la fait réagir avec un composé de formule M(OR')ₙ₊₁ dans laquelle R' répond à la même définition que R, R et R' étant différents, dans des conditions telles que l'on forme des liaisons A ― O ― M(OR')ₙ en remplacement des liaisons A ― O ― M(OR)ₙ d'origine.

La présente invention concerne aussi l'utilisation comme catalyseur d'une composition telle que décrite ci-dessus ou telle que susceptible d'être obtenue par le procédé décrit plus haut, dans un procédé de polymérisation par ouverture de cycles oxygénés.

Comme produits à cycle oxygéné susceptibles d'être polymérisés, on peut citer les oxydes d'alkyles comme l'oxyde d'éthylène ou l'oxyde de propylène; les esters cycliques du type lactones ou lactides ou les carbonates cycliques. L'invention s'applique aussi à la copolymérisation entre eux ou avec CO₂ des produits à cycle oxygéné.

La polymérisation est faite en présence d'un composé protique. Ce composé protique peut être choisi parmi les acides carboxyliques, les alcools, les thiols, les glycols et les polyols.

On peut utiliser notamment les alcools de formule R'(OH)ₘ dans laquelle m est un nombre entier supérieur ou égal à 1 et R' représente un radical organique ayant de 1 à 100 atomes de carbone et plus particulièrement de 1 à 50 atomes de carbone comportant éventuellement un ou plusieurs hétéroatomes comme les halogènes, razote, l'oxygène, le soufre et le phosphore. R peut être plus particulièrement un groupe alkyl, saturé ou insaturé, linéaire ou ramifié, un groupe aryle, un groupe aralkyle ou un groupe alkaryle. L'alcool peut avoir en outre des fonctions réactives comme une fonction acrylate, styrénique, maléate ou un halogène.

Comme groupe alkyle on peut citer plus particulièrement les groupes isopropyle, hexyle ou dodécyle. Comme groupe aralkyle on peut mentionner l'alcool benzilique. Comme groupe comportant un hétéroatome on peut citer les polyethers et les perfluoroalkyles. Comme fonction réactive particulière ou alcool comportant un halogène, on peut indiquer l'hydroxyéthylmétacrylate, l'hydroxyméthylstyrène et le bromo-undécanol.

Comme composé protique, on peut aussi utiliser les acides organiques de formule R'CO ― (OH)ₘ, R' et m étant définis comme ci-dessus. On peut faire mention, à titre d'exemple, de l'hémiester de l'anhydride maléique.

La polymérisation est habituellement conduite en milieu solvant. On choisit un solvant du polymère formé. Il s'agit d'un solvant aprotique anhydre du type décrit plus haut.

On effectue la polymérisation à une température suffisamment élevée pour obtenir une viscosité du milieu réactionnel qui ne soit pas trop importante. Par ailleurs, cette température ne doit pas être trop élevée afin d'éviter les réactions secondaires. Généralement, la température est comprise entre 40 et 80°C. La durée de la réaction peut varier dans des limites relativement étendues. Cette durée peut ainsi aller d'une minute à plusieurs heures.

La réaction catalytique est conduite selon les procédés habituels aux réacteurs utilisant des catalyseurs solides et des effluents liquides en particulier en lit agité ou en lit fixe, en procédé continu ou discontinu.

Les compositions de l'invention se révèlent particulièrement intéressantes pour effectuer les polymérisations par ouverture de cycles en mode hétérogène, ces polymérisations ayant les caractéristiques des polymérisations vivantes et permettant le contrôle de la masse molaire par la quantité ajoutée de composé protique. Elles permettent l'obtention de polymères à pureté améliorée et à distribution étroite de la masse molaire ainsi que de copolymères à blocs ou statistiques.

Enfin, les compositions de l'invention peuvent être réutilisées après la polymérisation et après un simple lavage par un composé protique identique ou différent de celui utilisé pour la première polymérisation.

Les compositions de l'invention à support en alumine sont efficaces plus particulièrement pour la polymérisation des oxydes d'alkyle, l'oxyde d'éthylène ou l'oxyde de propylène notamment. Les compositions à support silice sont efficaces notamment pour la polymérisation des esters cycliques du type lactone.

Des exemples vont maintenant être donnés.

### EXEMPLE 1

### Obtention d'une silice fonctionnalisée par l'isopropylate d'yttrium

On utilise une silice Grace 432 préalablement traitée thermiquement dans les conditions suivantes. La silice est chauffée de la température ambiante à 100°C en 30 minutes, puis de 130°C à 450°C en 1 heure et enfin à 450°C pendant 2 heures. Le refroidissement a lieu sous vide dynamique. On introduit sous argon dans un tube de Schlenck 1 g de cette silice en suspension dans 20 ml de toluène séché sur tamis moléculaire 3 Å, puis 2,2 ml d'une solution d'isopropylate d'yttrium à 25% en poids moléculaire 0,3nm , puis 2,2 ml d'une solution d'isopropylate d'yttrium à 25% en poids (0,0018 mole d'isopropylate d'yttrium) (solution commerciale dans le toluène Strem référence 39-3000). Après réaction pendant 3 heures à 50°C, on lave le solide avec trois fois 10 ml de toluène. On soutire le liquide résiduel, puis on sèche le solide à 50°C sous vide d'une pompe à palette. Le solide séché est gardé sous argon dans un tube de Schlenck. La teneur en isopropylate d'yttrium fixée sur la silice est mesurée par analyse élémentaire de l'yttrium et du carbone (Y = 11,4% en poids; C = 2,14% en poids). Il y a, dans ces conditions, autant d'atomes d'yttrium fixés que de fonctions hydroxyles portées par la silice.

### EXEMPLE 2

### Polymérisation de l'ε-caprolactone par l'isopropylate d'yttrium supporté sur silice en présence d'isopropanol

500 mg de la silice fonctionnalisée selon la méthode décrite dans l'exemple 1 (supportant 0,0006 mole d'yttrium) sont introduits sous argon dans un tube de Schlenck et mis en suspension dans 30 ml de toluène séché sur tamis moléculaire 0,3nm à 50°C. 0,45 ml d'isopropanol (0,006 mole) et 8 ml d'ε-caprolactone (0,072 mole) sont ajoutés à la suspension. La réaction de polymérisation est suivie par chromatographie en phase vapeur (étalon interne : dichloro-1,2 éthane séché sur tamis moléculaire 0,3nm ). La polymérisation est terminée en 10 minutes. 5 ml d'éthanol sont ajoutés à la suspension pour libérer les chaînes polymères fixées sur la silice et on laisse la silice décanter. La solution de polymère est ensuite filtrée et le polymère est récupéré par évaporation du solvant sous vide à l'évaporateur rotatif. On obtient 8,2 g de polymère. Le polymère est analysé par résonance magnétique nucléaire du proton et du carbone 13. Le degré de polymérisation moyen en nombre est déduit du rapport lactone incorporée/isopropoxy de début de chaine et il est égal à 10.

L'analyse RMN montre qu'il y a autant de groupements isopropoxy en début de chaine que de fonctions alcool en fin de chaine ce qui démontre le caractère vivant de la polymérisation.

### EXEMPLE 3

### Obtention d'une silice fonctionnalisée par le benzylate d'yttrium et polymérisation subséquente de l'ε-caprolactone

500 mg de la silice fonctionnalisée selon la méthode décrite dans l'exemple 1 (supportant 0,0006 mole d'yttrium) sont introduits sous argon dans un tube de Schlenck et mis en suspension dans 30 ml de toluène séché sur tamis moléculaire 0,3nm à 50°C. On additionne 1,2 ml d'alcool benzylique (0,012 mole) et on laisse réagir à 50°C pendant 1 heure. On lave ensuite avec trois fois 10 ml de toluène pour éliminer l'isopropanol dégagé et l'alcool benzylique en excès. Le liquide surnageant est éliminé et le solide séché à 50°C sous vide d'une pompe à palette. Ce solide est mis en suspension dans 30ml de toluène.

0,6 ml d'alcool benzylique (0,006 mole) et 8 ml d'ε-caprolactone (0,072 mole) sont ajoutés à la suspension. La réaction de polymérisation est suivie par chromatographie en phase vapeur (étalon interne : dichloro-1,2-éthane séché sur tamis moléculaire 0,3nm ). La polymérisation est terminée en 10 minutes. 5 mi d'éthanol sont ajoutés à la suspension pour libérer les chaînes polymères fixées sur la silice. Après décantation de la silice, la solution de polymère est filtrée et le polymère est récupéré par évaporation du solvant sous vide à l'évaporateur rotatif. On obtient 9 g de polymère. Le polymère est analysé par résonance magnétique nucléaire du proton et du carbone 13. Le degré de polymérisation moyen en nombre est déduit du rapport lactone incorporée/benzyloxy de début de chaine et il est égal à 10.

### EXEMPLE 4

### Obtention d'une silice fonctionnalisée par l'isopropylate de néodyme et polymérisation de l'ε-caprolactone

On introduit sous argon dans un tube de Schlenck 1 g de silice Grace 432, préalablement chauffée à 450°C dans les conditions décrites dans l'exemple 1, en suspension dans 20 ml de toluène séché sur tamis moléculaire 0,3nm , puis 580 mg d'isopropylate de néodyme (0,0018 mole produit Strem référence 93.6012). Après réaction pendant 3 heures à 50°C, on lave le solide avec trois fois 10 ml de toluène, on soutire le liquide résiduel, puis on sèche le solide à 50°C sous vide d'une pompe à palette. Le solide séché est gardé sous argon dans un tube de Schlenck. La teneur en isopropylate de néodyme fixée sur la silice est mesurée par analyse élémentaire du néodyme et du carbone (Nd = 15,5% en poids; C = 3,43% en poids). Il y a, dans ces conditions, autant d'atomes de néodyme fixés que de fonctions hydroxyles portées par la silice.

500 mg de cette silice fonctionnalisée sont utilisés pour la polymérisation de l'ε-caprolactone selon la méthode décrite dans l'exemple 2. La réaction est complète en 30 minutes.

### EXEMPLE 5

### Obtention d'une alumine fonctionnalisée par l'isopropylate de néodyme

On utilise une alumine Procatalyse préalablement traitée thermiquement dans les conditions suivantes. L'alumine est chauffée de la température ambiante à 100°C en 30 minutes, puis de 100°C à 130°C en 30 minutes puis de 130°C à 200°C en 1/2 heure et enfin à 200°C pendant 2 heures. Le refroidissement a lieu sous vide dynamique.

On met sous argon dans un tube de Schlenck 1 g de cette alumine (contenant 1,6.10⁻³ mole OH) en suspension dans 20 ml de toluène séché sur tamis moléculaire 0,3nm, puis 770 mg d'isopropylate de néodyme (2,4.10⁻³ mole) (produit Strem).

Après réaction pendant 3 heures à 50°C, on lave le solide avec trois fois 10 ml de toluène, on soutire le liquide résiduel, puis on sèche le solide à 50°C sous vide d'une pompe à palette. Le solide séché est gardé sous argon dans un tube de Schlenck. La teneur en isopropylate de néodyme fixée sur l'alumine est mesurée par analyse élémentaire du néodyme et du carbone (Nd = 8,24% en poids; C = 2,12% en poids). Il y a, dans ces conditions, 7,9.10⁻⁴ mole de néodyme greffé sur 1 g d'alumine.

### EXEMPLE 6

### Polymérisation de l'oxyde d'éthylène par l'isopropylate de néodyme supporté sur alumine en présence d'isopropanol

500 mg d'alumine fonctionnalisée selon la méthode décrite dans l'exemple 5 (supportant 3,95.10⁻⁴ mole de néodyme) sont mis en suspension sous argon dans un ballon de 250 ml contenant 40 ml de toluène séché sur tamis moléculaire 0,3nm et équipé d'un agitateur magnétique, d'un thermocouple, d'un capteur de pression et d'une ampoule de coulée renfermant l'oxyde d'éthylène préalablement distillé sous vide.

On ajoute 0,3 ml d'isopropanol (0,004 mole) dans le ballon. On fait le vide à l'aide d'une pompe à palette (le vide résiduel étant la tension de vapeur des liquides contenus dans le ballon) et on chauffe à 55°C.

2,4 ml d'oxyde d'éthylène (0,048 mole) sont ajoutés lentement à la suspension. La réaction de polymérisation est suivie par le capteur de pression. A la fin de la polymérisation (retour à la pression d'origine), 5 ml d'éthanol sont ajoutés à la suspension pour libérer les chaînes polymères fixées sur l'alumine. Après décantation de l'alumine, la solution de polymère est filtrée et le polymère est récupéré par évaporation du solvant sous vide à l'évaporateur rotatif. On obtient 5 g de polymère. Le polymère est analysé par résonance magnétique nucléaire du proton et du carbone 13. Le degré de polymérisation moyen en nombre est déduit du rapport éthoxy incorporé/isopropoxy de début de chaine et il est égal à 10.

### EXEMPLE 7

### Obtention d'une alumine fonctionnalisée par l'isopropylate de samarium

On met sous argon dans un tube de Schlenck 1 g d'alumine Procatalyse préalablement traitée à 450°C selon la méthode décrite dans l'exemple 1 (contenant 0,8.10⁻³ mole OH) en suspension dans 20 ml de toluène séché sur tamis moléculaire 3nm, puis 0,393 mg d'isopropylate de samarium (1.2.10⁻³ mole) (produit Strem référence 93.6214).

Après réaction pendant 3 heures à 50°C, on lave le solide avec trois fois 10 ml de toluène, on soutire le liquide résiduel, puis on sèche le solide à 50°C sous vide d'une pompe à palette. Le solide séché est gardé sous argon dans un tube de Schlenck. La teneur en isopropylate de samarium fixé sur l'alumine est mesurée par analyse élémentaire du samarium et du carbone (Sm = 3,20% en poids; C = 3,15% en poids). Il y a, dans ces conditions, 2,32.10⁻⁴ mole de samarium greffé sur 1 g d'alumine.

### EXEMPLE 8

### Polymérisation de l'oxyde de propylène par l'isopropylate de samarium supporté sur alumine en présence d'isopropanol

500 mg d'alumine fonctionnalisée selon la méthode décrite dans l'exemple 7 (supportant 1,16.10⁻⁴ mole de samarium) sont mis en suspension sous argon dans un ballon de 250 ml contenant 40 ml de toluène séché sur tamis moléculaire 0,3nm et équipé d'un agitateur magnétique, d'un thermocouple, d'un capteur de pression et d'une ampoule de coulée renfermant l'oxyde de propylène préalablement distillé sous vide sur hydrure de calcium.

On ajoute 0,18 ml d'isopropanot (0,0023 mole) dans le ballon. On fait le vide à l'aide d'une pompe à palette (le vide résiduel étant la tension de vapeur des liquides contenus dans le ballon) et on chauffe à 55°C.

3,5 ml d'oxyde de propylène (0,05 mole) sont ajoutés lentement à la suspension. La réaction de polymérisation est suivie par le capteur de pression. A la fin de la polymérisation (retour à la pression d'origine), 5 ml d'éthanol sont ajoutés à la suspension pour libérer les chaînes polymères fixées sur l'alumine. Après décantation de l'alumine, la solution de polymère est filtrée et le polymère est récupéré par évaporation du solvant sous vide à l'évaporateur rotatif. On obtient 4,4 g de polymère. La microstructure du polymère est déterminée par résonance magnétique nucléaire du proton et du carbone 13. Le degré de polymérisation moyen en nombre est déduit du rapport propoxy incorporé/isopropoxy de début de chaine et il est égal à 20.

### EXEMPLE 9

### Obtention d'une alumine fonctionnalisée par l'isobutylate de zirconium et utilisation pour la préparation de copolymères à bloc oxyde de propylène-oxyde d'éthylène

On met sous argon dans un tube de Schlenck 1 g d'alumine Procatalyse préalablement traitée à 450°C selon la méthode décrite dans l'exemple 1 (contenant 0,8.10⁻³ mole OH) en suspension dans 20 ml de toluène séché sur tamis moléculaire 3nm, puis 0,8ml d'une solution commerciale d'isobutylate de zirconium (Strem référence 93.4003). Après réaction pendant 3 heures à 50°C, on.lave le solide avec trois fois 10 ml de toluène, on soutire le liquidé résiduel, puis on sèche le solide à 50°C sous vide d'une pompe à palette. La teneur en isobutylate de zirconium fixé sur l'alumine est mesurée par analyse élémentaire du zirconium et du carbone (Zr = 1,45% en poids; C = 4,48% en poids).

Le produit ainsi préparé est mis en suspension sous argon dans un ballon de 250ml contenant 40ml de toluène séché sur tamis et équipé d'un agitateur magnétique, d'un thermocouple, d'un capteur de pression et d'une ampoule de coulée renfermant l'oxyde de propylène préalablement séché sur de l'hydrure de sodium. On ajoute 0,18ml d'alcool benzylique (1,76. 10⁻³ mole) dans le ballon. On fait le vide à l'aide d'une pompe à palette et on chauffe à 55°C. 1,6ml d'oxyde de propylène (0,0299 mole) sont ajoutés lentement à la suspension. La réaction de polymérisation est suivie par la chute de pression dans le ballon. A la fin de la réaction, on remet le système sous argon et on introduit 40ml de toluène. On fait le vide et on chauffe à 55°C. 1,15ml d'oxyde d'éthylène (0,0299mole) sont ajoutés lentement. A la fin de la polymérisation (retour à la pression d'origine), 5ml d'éthanol sont ajoutés à la suspension pour libérer les chaînes polymères fixées sur l'alumine. Après décantation de l'alumine, la solution du copolymère est filtrée et le copolymère est récupéré par évaporation du solvant sous vide à l'évaporateur rotatif. On obtient 3g de copolymère. Le copolymère est caractérisé par résonance magnétique nucléaire du proton et du carbone 13. On note en particulier l'altemance OP-OE caractéristique du copolymère à bloc.

### EXEMPLE 10

### Polymérisation du 2,2-diméthyltriméthylène carbonate par le benzylate d'yttrium supporté sur silice en présence d'alcool benzylique

500 mg de la silice fonctionnalisée selon la méthode décrite dans l'exemple 1 (supportant 0,0006 mole d'yttrium) sont introduits sous argon dans un tube de Schlenck et mis en suspension dans 30 ml de toluène séché sur tamis moléculaire 0,3nm à 50°C. On additionne 1,2 ml d'alcool benzylique (0,012 mole) et on laisse réagir à 50°C pendant 1 heure. On lave ensuite avec trois fois 10 ml de toluène pour éliminer l'isopropanol dégagé et l'alcool benzylique en excès.

0,6 ml d'alcool benzylique (0,006 mole) et 7,8 g de 2,2-diméthyltrimétylène carbonate (0,06 mole) en solution dans 75 ml de toluène sec sont ajoutés à la suspension. La réaction de polymérisation est suivie par chromatographie par exclusion stérique et par résonance magnétique nucléaire du proton. La polymérisation est terminée en 5 minutes. 5 ml d'éthanol sont ajoutés à la suspension pour libérer les chaînes polymères fixées sur la silice, la solution de polymère est filtrée et le polymère est récupéré par évaporation du solvant à l'évaporateur rotatif. On obtient 8 g de polymères. Le polymère est analysé par résonance magnétique nucléaire du proton et du carbone 13. Le degré de polymérisation moyen en nombre est déduit du rapport carbonate cyclique incorporé/unité benzyloxy de début de chaîne égal à 10.

## Revendications

1. Procédé de polymérisation par ouverture de cycles oxygénés, **caractérisé en ce qu'**on utilise, en présence d'un composé protique, à titre de catalyseur, une composition comprenant un support choisi dans le groupe des oxydes métalliques susceptibles de présenter des fonctions hydroxyles, sur lequel est greffé un groupement de formule (1) ― M(OR)ₙ dans laquelle M est un élément choisi parmi le scandium, le zirconium, l'hafnium, le niobium, le tantale, les terres rares et les actinides, R est un groupement organique et n est un nombre entier supérieur ou égal à 1.

2. Procédé selon la revendication 1, **caractérisé en ce qu'**on utilise à titre de catalyseur une composition dont le support est choisi parmi la silice, l'alumine, l'oxyde de zirconium, l'oxyde de cérium, l'oxyde de titane, l'oxyde de thorium ou leurs associations ou mélanges.

3. Procédé selon la revendication 1 ou 2, **caractérisé en ce qu'**on utilise à titre de catalyseur une composition comprenant un support sur lequel est greffé un groupement précité de formule (1) dans laquelle M est l'yttrium, le lanthane, le samarium ou le néodyme.

4. Procédé selon l'une des revendications précédentes, **caractérisé en ce qu'**on utilise à titre de catalyseur une composition comprenant un support sur lequel est greffé un groupement précité de formule (1) dans laquelle R est un groupe alkyl, saturé ou insaturé, linéaire ou ramifié, un groupe aryle, un groupe aralkyle ou un groupe alkaryle.

5. Procédé selon l'une des revendications précédentes, **caractérisé en ce qu'**on utilise à titre de catalyseur une composition comprenant un support qui est un oxyde dans lequel on a éliminé l'eau libre ou adsorbée.

6. Procédé selon l'une des revendications précédentes, **caractérisé en ce que** les cycles oxygénés sont des oxydes d'alkyles, des esters cycliques ou des carbonates cycliques.

7. Procédé selon l'une des revendications précédentes, **caractérisé en ce que** la polymérisation a lieu en milieu solvant.

8. Procédé selon l'une des revendications précédentes, **caractérisé en ce que** le composé protique est choisi parmi les acides carboxyliques, les alcools, les thiols, les glycols et les polyols.

9. Procédé selon l'une des revendications précédentes, **caractérisé en ce que** le cycle oxygéné est un oxyde d'alkyle, et **en ce qu'**on utilise une composition dont le support est l'alumine.

10. Procédé selon la revendication 9, **caractérisé en ce que** le cycle oxygéné est l'oxyde d'éthylène ou l'oxyde de propylène.

11. Procédé selon l'une des revendications précédentes, **caractérisé en ce que** le cycle oxygéné est un ester cyclique et **en ce qu'**on utilise une composition dont le support est la silice.

12. Procédé selon l'une des revendications précédentes, **caractérisé en ce qu'**on fait copolymériser des produits à cycle oxygèné, entre eux ou avec le CO₂.

## Claims

1. Process of polymerization by opening of oxygenated cycles, **characterized in that** there is used, in the presence of a protic compound, as catalyst, a composition comprising a support chosen from among the group of metal oxides likely to present hydroxyl functions, onto which is grafted a grouping of formula (1)―M(OR)ₙ in which M is an element chosen from among scandium, zirconium, hafnium, niobium, tantalum, the rare earths and the actinides, R is an organic grouping and n is an integer greater than or equal to 1.

2. Process according to claim 1, **characterized in that** there is used as catalyst a composition of which the support is chosen from among silica, alumina, zirconium oxide, cerium oxide, titanium oxide, thorium oxide or their combinations or mixtures.

3. Process according to claim 1 or 2, **characterized in that** there is used as catalyst a composition comprising a support onto which is grafted an aforementioned grouping of formula (1) in which M is yttrium, lanthanum, samarium or neodymium.

4. Process according to one of the previous claims, **characterized in that** there is used as catalyst a composition comprising a support onto which is grafted an aforementioned grouping of formula (1) in which R is an alkyl group, saturated or unsaturated, linear or branched, an aryl group, an aralkyl group or an alkaryl group.

5. Process according to one of the previous claims, **characterized in that** there is used as catalyst a composition comprising a support which is an oxide from which the free or adsorbed water has been eliminated.

6. Process according to one of the previous claims, **characterized in that** the oxygenated cycles are alkyl oxides, cyclic esters or cyclic carbonates.

7. Process according to one of the previous claims, **characterized in that** the polymerization takes place in solvent medium.

8. Process according to one of the previous claims, **characterized in that** the protic compound is chosen from among the carboxylic acids, alcohols, thiols, glycols and polyols.

9. Process according to one of the previous claims, **characterized in that** the oxygenated cycle is an alkyl oxide, and **in that** a composition is used the support of which is alumina.

10. Process according to claim 9, **characterized in that** the oxygenated cycle is ethylene oxide or propylene oxide.

11. Process according to one of the previous claims, **characterized in that** the oxygenated cycle is a cyclic ester and **in that** a composition is used the support of which is silica.

12. Process according to one of the previous claims, **characterized in that** products having an oxygenated cycle are copolymerized between themselves or with CO₂.

## Patentansprüche

1. Verfahren zur Polymerisation durch Öffnung sauerstoffhaltiger Ringe, **dadurch gekennzeichnet, daß** man, in Gegenwart einer protischen Verbindung, als Katalysator eine Zusammensetzung verwendet, die einen Träger, ausgewählt aus der Gruppe der metallischen Oxide, die imstande sind, Hydroxylfunktionen aufzuweisen, umfaßt, auf den eine Gruppe der Formel (1) ―M(OR)ₙ gepfropft ist, worin M ein Element, ausgewählt unter Scandium, Zirkonium, Hafnium, Niob, Tantal, den seltenen Erden und den Actiniden bedeutet, R eine organische Gruppe ist und n eine ganze Zahl von größer als oder gleich 1 ist.

2. Verfahren gemäß Anspruch 1, **dadurch gekennzeichnet, daß** man als Katalysator eine Zusammensetzung verwendet, deren Träger unter Siliciumdioxid, Aluminiumoxid, Zirkonoxid, Ceroxid, Titanoxid, Thoriumoxid oder deren Assoziationen oder Gemischen ausgewählt ist.

3. Verfahren gemäß Anspruch 1 oder 2, **dadurch gekennzeichnet, daß** man als Katalysator eine Zusammensetzung verwendet, die einen Träger umfaßt, auf den eine vorstehende Gruppe der Formel (1) gepfropft ist, worin M Yttrium, Lanthan, Samarium oder Neodym ist.

4. Verfahren gemäß einem der vorhergehenden Ansprüche, **dadurch gekennzeichnet, daß** man als Katalysator eine Zusammensetzung verwendet, die einen Träger umfaßt, auf den eine vorstehende Gruppe der Formel (1) gepfropft ist, worin R eine lineare oder verzweigte, gesättigte oder ungesättigte Alkylgruppe, eine Arylgruppe, eine Aralkylgruppe oder eine Alkarylgruppe ist.

5. Verfahren gemäß einem der vorhergehenden Ansprüche, **dadurch gekennzeichnet, daß** man als Katalysator eine Zusammensetzung verwendet, die einen Träger umfaßt, der ein Oxid ist, aus dem freies oder adsorbiertes Wasser eliminiert worden ist.

6. Verfahren gemäß einem der vorhergehenden Ansprüche, **dadurch gekennzeichnet, daß** die sauerstoffhaltigen Ringe Alkyloxide, cyclische Ester oder cyclische Carbonate sind.

7. Verfahren gemäß einem der vorhergehenden Ansprüche, **dadurch gekennzeichnet, daß** die Polymerisation in einem Lösungsmittelmilieu stattfindet.

8. Verfahren gemäß einem der vorhergehenden Ansprüche, **dadurch gekennzeichnet, daß** die protische Verbindung unter den Carbonsäuren, den Alkoholen, den Thiolen, den Glykolen und den Polyolen ausgewählt wird.

9. Verfahren gemäß einem der vorhergehenden Ansprüche, **dadurch gekennzeichnet, daß** der sauerstoffhaltige Ring ein Alkyloxid ist, und daß man eine Zusammensetzung verwendet, deren Träger Aluminiumoxid ist.

10. Verfahren gemäß Anspruch 9, **dadurch gekennzeichnet, daß** der sauerstoffhaltige Ring Ethylenoxid oder Propylenoxid ist.

11. Verfahren gemäß einem der vorhergehenden Ansprüche, **dadurch gekennzeichnet, daß** der sauerstoffhaltige Ring ein cyclischer Ester ist, und daß man eine Zusammensetzung verwendet, deren Träger Siliciumdioxid ist.

12. Verfahren gemäß einem der vorhergehenden Ansprüche, **dadurch gekennzeichnet, daß** man Produkte mit sauerstoffhaltigem Ring untereinander oder mit CO₂ copolymerisieren läßt.
